# EUROPEAN PATENT SPECIFICATION

(11) **EP 2 046 525 B1**
(45) Date of publication and mention of the grant of the patent: **17.04.2013**
(21) Application number: 07804688.5
(22) Date of filing: 02.08.2007
(51) Int. Cl.: B23K 26/12, B23K 26/14, A61F 13/15, B23K 26/08

(54) **A DEVICE FOR LASER CUTTING A CONTINUOUS STRIP**
VORRICHTUNG ZUM LASERSCHNEIDEN EINES BANDES
DISPOSITIF POUR COUPER UNE BANDE CONTINUE PAR LASER

(30) Priority: 03.08.2006 IT BO20060586
(43) Date of publication of application: 15.04.2009
(60) Divisional application: 13158106.8
(73) Proprietor: GDM S.p.A., 40133 Bologna (IT)
(72) Inventor: PIANTONI, Matteo, 24021 Albino (IT); PEREGO, Alberto, 20154 MILANO (IT); PACINI, Piero, 50144 Firenze (IT)
(74) Representative: Bianciardi, Ezio
(86) International application number: PCT/IB2007/002215
(87) International publication number: WO 2008/015550

(56) References cited:
- EP-A- 1 449 798
- WO-A-2005/070240
- US-A- 4 115 683

## Description

### Technical Field

The present invention relates to a device for laser cutting a continuous strip according to the preamble of claim 1. EP 1449798 discloses such a device.

In particular, the present invention finds application typically in the manufacture of personal hygiene products, such as babies' nappies/diapers, sanitary towels and the like.

### Background Art

Familiar personal hygiene products comprise an absorbent pad sandwiched normally between a permeable inner layer of spun-bonded fabric and an impermeable outer layer of polyethylene.

The manufacture of such articles involves the formation initially of a continuous strip incorporating the layers described above, whereupon the strip is shaped and finally separated into single items ready for packaging.

The shaping step consists mainly in the cutting of leg contours and, more generally, serves to give the article an outline appropriate for the specified use.

Prior art devices utilized for this type of operation comprise a rotating drum, around which the strip is looped partially as it advances in a predetermined direction, and a laser cutting head that operates on the strip in the course of its passage over the drum. Laser cutting heads are especially suitable for processes used in the manufacture of personal hygiene products, by virtue of their low maintenance requirements and their ease of control and adjustment, especially when compared with rotary blade cutter systems adopted in this same art field, which require frequent replacement of the blades, or at all events, frequent regeneration of the cutting edges.

On the debit side, the cut made with a laser beam generates smoke as a result of the high temperatures induced locally at the cutting area, an effect attributable substantially to sublimation of the strip material. The smoke given off tends to recondense on the cut outlines immediately, giving place to the formation of beads along the edges, with the result that the cut profile presents irregularities and a visually unattractive appearance. This means that the smoke needs to be removed more or less instantaneously, before it can condense, so that the beads in question will not form.

Accordingly, the practice is to position smoke extraction ports above the strip, near to the laser cutting head.

Disadvantageously, the overall dimensions of the device are increased significantly by the addition of such extraction ports in the manner described above, and the space available for installation of the laser head is also limited.

With a configuration of this type, moreover, the smoke cannot be removed to sufficiently good effect from the portion of the strip in contact with the mantle, given that this portion is located farthest from the ventilating action.

In the light of the foregoing, the primary object of the present invention is to provide a device for laser cutting a continuous strip of material, such as will be unaffected by the drawbacks mentioned above.

One important aspect of the aforementioned object is to provide a device of compact overall dimensions for laser cutting a continuous strip of material.

A further object of the invention is to provide a device for laser cutting a continuous strip, such as will allow a smoke-extracting action to be generated as uniformly and effectively as possible across the full section of the continuous strip.

Another important object of the invention, finally, is to provide a device for laser cutting a continuous strip, embodied in such a manner that a change of air can be effected along the entire area of the laser cut.

### Disclosure of the Invention

The stated objects are realized substantially, according to the present invention, in a device for laser cutting a continuous strip, as described in the claims appended.

The invention will now be described in detail, by way of example, with the aid of the accompanying drawings, in which:
- figure 1 is a schematic illustration showing part of a system for manufacturing personal hygiene products, equipped with a device for laser cutting a continuous strip of material in accordance with the present invention;
- figure 2 is a schematic illustration showing a detail of the device in figure 1.

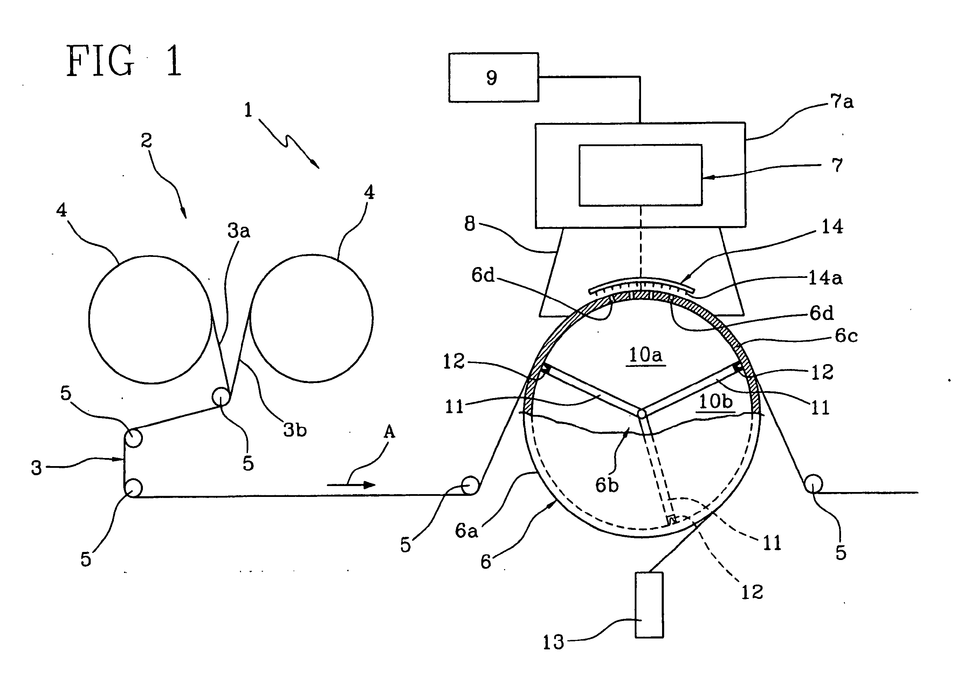

With reference to figure 1, a device according to the invention is denoted 1, in its entirety.

The device 1 comprises a decoiler 2, illustrated schematically (being of conventional embodiment), occupying a station at which a continuous strip 3 of padded material is assembled, for example by pairing together a first layer 3a of permeable material and a second layer 3b of impermeable material, between which a portion of absorbent material (not illustrated) is sandwiched to provide a padding layer. The assembly step is effected, for example, by two feed rollers 4 and by a device of conventional type (not illustrated in the drawings) that serves to place the padding.

Thereafter, the assembled strip 3 is caused to advance along a predetermined direction "A", tensioned by means 5 of familiar type, and directed onto a conveyor 6 embodied preferably as a rotating drum 6a, in such a way that the continuous strip 3 will wrap around the selfsame drum 6a at least in part. The strip 3 is taken up by further tensioning means 5 stationed downstream of the rotating drum 6a, and directed toward further processing steps.

In a preferred embodiment, the rotating drum 6a comprises a fixed portion denoted 6b, and a revolving annular mantle 6c mounted to the fixed portion 6b, about which the continuous strip 3 is looped at least in part. In this situation, the continuous strip 3 is accompanied in its movement along the feed direction "A" by the revolving motion of the mantle 6c, so that there will be no sliding contact between the strip 3 and the mantle 6c.

To advantage, in the example illustrated, the mantle 6c also presents a plurality of through holes 6d, or alternatively a mesh structure, of which the function will be made clear in due course.

The device 1 comprises a laser cutting head denoted 7, located on the side of the continuous strip 3 opposite from the conveyor 6. The head 7 is utilized to fashion leg contours, or rather to shape at least one portion of the peripheral outline selected for the manufactured article, by cutting away part of the selfsame strip 3. Alternatively, the laser cutting head 7 might be used to shape the entire peripheral outline of the article.

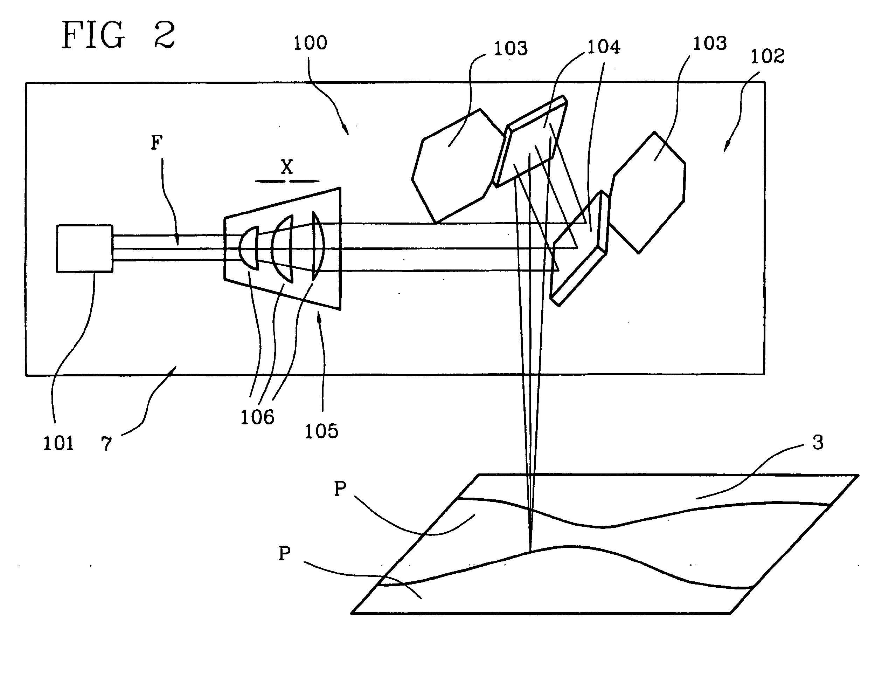

In particular, the head 7 operates along two cutting paths "P", generated symmetrically in relation to the feed direction "A" followed by the continuous strip 3 over the rotating drum 6a. To this end, as illustrated in figure 2, the cutting head 7 comprises at least one mirror scanning appliance 100 with which to effect the cut in the continuous strip 3 along the aforementioned paths "P". Preferably, the cutting head 7 will comprise two mirror scanning appliances 100, each deployed so as make a cut along one of the two paths "P". Each scanning appliance 100 directs a respective laser beam "F", generated by one or more laser sources 101 of familiar type, onto the area of the cut. Likewise preferably, each of the two laser beams "F" is generated by a respective source 101, and in particular, the two beams "F" are of the same rated output. Also, the laser beams "F" are preferably circular in section.

Each of the mirror-scanning appliances 100 comprises focusing means 102 designed to keep the respective laser beam "F" trained correctly on the cutting area, thereby ensuring that the cut is made in the strip 3 efficiently and in such a way as to guarantee a suitably dependable level of quality.

In more detail, such focusing means 102 comprise two precision galvanometers 103, each rotatable about a relative axis, also two mirrors 104 of high reflectivity mounted one on the axis of each galvanometer 103, positioned to receive a laser beam "F" and divert it by reflection toward the cutting area. Preferably, the axes of rotation of the two galvanometers 103 are mutually perpendicular. Thus, with the two galvanometers 103 able to rotate about their respective axes and operating in combination one with another, the relative laser beams "F" can be directed onto any given point of the cutting area with notable precision.

Focusing means 102 further comprise an optical collimator 105 installed upstream of the galvanometers 103, relative to a direction in which the laser beams "F" are projected. The collimator 105 consists preferably in a plurality of lenses 106, combining to provide two main functions. The first function of the lenses 106 is to expand a transverse dimension of the laser beam "F", preferably increasing its diameter fourfold or thereabouts. Thereafter, the focusing means 102 will concentrate the beam "F" onto a focal spot of some few tenths of a millimetre.

The second of the two functions performed by the lenses 106 of the collimator 105 is to maintain correct focus of the beam on the entire cutting area, compensating for the different optical distances that exist between the focusing means 102 and different points of the cutting area, not least as a result of the fact that the cutting area is not flat, coinciding as it does with the face of the drum 6a. Accordingly, one of the lenses 106 is capable of movement relative to the other lenses, and in particular, translatable toward and away from the other lenses 106 in a direction "X" indicated by arrows in figure 2. The movement is obtained preferably through the agency of a linear galvanometer, not illustrated in figure 2.

At all events, the area targeted by the laser beam is shielded by a hood 8 located between the strip 3 and the laser cutting head 7, such as will afford protection to any operators in the vicinity from direct contact with the laser beams "F" during the cutting operation.

To protect the laser cutting head 7, the device 1 further comprises a pressurized housing 7a internally of which the cutting head 7 is accommodated, and of which the enclosed space is maintained at a pressure high than atmospheric, so as to prevent the infiltration of air from the outside and consequently avoid any possibility that airborne dust particles might enter and settle on the laser cutting head 7, thereby rendering its operation less than optimal.

Advantageously, the laser cutting head 7 is associated with a device 9 by means of which to control the initial position of the selfsame head 7. The control device 9 is able to pilot a transverse and/or longitudinal displacement of the cutting head 7, in such a way that the selected contour of the cut can be generated by inducing relative motion between the head 7 and the strip 3.

The control device 9 also governs the displacement of the head 7 relative to the linear velocity of the advancing strip 3, so that the selected contours can be cut correctly from the continuous strip 3 even though there may be variations in the feed rate of the strip.

In detail, the device 9 performs control and setting functions and is equipped with dedicated software which, once a specific cutting path "P" has been plotted and saved, will proceed to generate signals piloting the movement of the cutting head 7 in the manner described above.

In a preferred embodiment, the cutting head 7 comprises suitable position transducers such as will monitor the position of the galvanometers continuously and communicate with the control device 9 in order to determine the corresponding displacement of the cutting head 7.

To ensure smooth operation of the device 1, moreover, it is preferable that no obstacle should find its way between the scanning devices 100 and the cutting area, so that the laser beams "F" can reach the cutting area without being deflected accidentally.

The interior of the conveyor 6 presents a first chamber 10a, preferably fixed and positioned specularly in relation to the laser cutting device 7 on the opposite side of the continuous strip 3, internally of which a partial vacuum is created by negative pressure means (not illustrated) connected to the selfsame chamber. The function of the negatively pressurized first chamber 10a is to attract the continuous strip 3 to the mantle 6c, keeping it tensioned and spread; this is accomplished with the aid of the aforementioned through holes 6d or mesh structure in the mantle 6c, by way of which the continuous strip 3 is exposed to the pressure level in the first chamber 10a. This said, the primary function of the partial vacuum established in the first chamber 10a is to extract the smoke produced by the laser cut, via the through holes 6d or mesh structure of the mantle 6c, so that it is prevented from condensing and forming beads on the cut edge. To this end, the through holes 6d or mesh structure could occupy the entire developable annular surface of the mantle 6c, in such a manner that the first chamber 10a will always face a pierced portion of the mantle 6c during the rotation of the selfsame mantle about the fixed portion 6b. Alternatively, the mantle 6c might present groups of the through holes 6d or discrete portions of the mesh structure, spaced apart one from the next in such a way as to coincide with respective cutting areas occurring in succession along the continuous strip 3. The groups of through holes 6d or portions of mesh structure would in this instance enable the extracting action only along segments of the continuous strip 3 coinciding with the laser cut areas.

To ensure the area of the strip affected by the laser cut is exposed effectively to negative pressure in the first chamber 10a while also preventing any infiltration of air from outside into the chamber 10a, which would significantly reduce the vacuum force, the fixed portion 6b and the mantle 6c of the rotating drum 6a are interfaced in fluid-tight association, preferably by way of baffles 11 delimiting the first chamber 10a and furnished with seals 12. For the same reason, the sides of the rotating drum 6a are sealed likewise hermetically. In particular, the sides of the drum consist in two mutually opposed circular walls, not illustrated in the drawings.

In an alternative embodiment of the device, the first chamber 10a might be positively rather than negatively pressured, functioning as a blower rather than an extractor.

The rotating drum 6a also comprises a second chamber denoted 10b, likewise fixed, preferably, and positioned downstream of the first chamber 10a in relation to the predetermined feed direction "A" followed by the continuous strip 3. In the example illustrated, the first chamber 10a and the second chamber 10b are mutually adjoining and distinct, so as to operate at different pressures, depending on the different function performed. More exactly, the function of the second chamber 10b, negatively pressurized like the first, is to attract and remove the scrap material generated by cutting the strip 3. Accordingly, the aforementioned through holes 6d, or mesh structure, will be proportioned in such a way as to disallow the passage of scrap fragments, so that these can be retained on the mantle 6c and carried away from the laser cutting head 7 and the strip 3 as the mantle rotates.

The device 1 further comprises a collection station 13 located beneath the conveyor 6, toward which the fragments of scrap material retained by the mantle 6c are carried. The station 13 in question serves to collect the scrap fragments, which drop freely from the mantle 6c once beyond the area exposed to the second chamber 10b and therefore no longer subjected to the aspirating force of the partial vacuum.

In a preferred embodiment, moreover, the scrap will be drawn likewise into the collection station 13 by an aspirating force.

In an alternative embodiment of the invention (not illustrated), the two chambers 10a and 10b might be in fluid communication one with another, so that a single source of negative pressure could be used to create the partial vacuum.

The device 1 further comprises a blower element 14, positioned specularly in relation to the conveyor 6 on the opposite side of the continuous strip 3 and facing the area affected by the laser cut, of which the function is to invest the continuous strip 3 with a flow of gas, preferably nitrogen or air, directed in particular at the cutting area. In a preferred embodiment, the blower element 14 will be placed to coincide with the area of the strip 3 exposed to the action of the first chamber 10a. With this arrangement, the cut edge is guaranteed not to harden through condensation of the smoke produced by the laser cut.

Preferably, and as shown in the example illustrated, the blower element 14 consists in a shroud 14a shaped as a cap of cylindrical geometry with a concave side facing toward the continuous strip 3. The blower element 14 is fashioned preferably with a plurality of nozzles 14b arranged along the full length of the shroud 14a.

To advantage, at least certain of the plurality of nozzles 14b are directed toward the area affected by the laser cut, or toward an area immediately downstream of the cutting area, so as to provide a suitable cooling action and remove the smoke produced by the cut. In particular, the area affected by the laser cut and the area cooled by the blower element 14 are set at a minimal distance one from the other, so that there will be no time for any molten particles to condense, and these same particles can therefore be removed tidily by the blowing action.

Thus, the action of the partial vacuum in the first chamber 10a and of the blower shroud 14a combine advantageously to remove the smoke generated by laser cutting successive portions of the continuous strip 3, both on the side facing the shroud 14a, and on the side breasted with the mantle 6c.

The drawbacks associated with the prior art are overcome in a device according to the present invention, which achieves the stated objects and affords key advantages.

First and foremost, the use of an extraction system associated with the first chamber, and in particular a partial vacuum generated internally of the first chamber, means that smoke produced by the laser cutting operation can be removed without needing to increase the overall dimensions of the device.

In addition, the adoption of the blower shroud is advantageous in that a jet of air can be directed at the area of the strip material affected by the laser cut. At the same time, the smoke produced by the laser cut can be removed swiftly and efficiently by the blower, and distanced safely from the cutting area.

Finally, the combination of the blower and the partial vacuum created in the first chamber provides the important advantage that every trace of smoke can be removed completely from the area affected by the laser cut. In particular, the blower element creates an air flow that clears the smoke from the portion of the continuous strip facing the laser head, whilst the vacuum action of the first chamber removes the smoke that tends to remain trapped between the portion of the continuous strip breasted with the mantle, and the mantle itself.

## Claims

1. A device for laser cutting a continuous strip, comprising a conveyor (6) over which a continuous strip (3) of material advancing along a predetermined feed direction (A) is looped at least in part, a laser head (7) by which the continuous strip (3) is cut, positioned on the side of the selfsame strip (3) opposite from the conveyor (6), wherein the conveyor (6) consists of a rotating drum (6a) furnished with a revolving annular mantle (6c) and the continuous strip (3) is looped at least in part around the mantle (6c), and wherein the conveyor (6) is furnished internally with a first chamber (10a) able to generate an extracting or blowing action on smoke produced by the laser cut and with a second chamber (10b) maintained at a partial vacuum, the two chambers (10a, 10b) are embodied separately, in such a way as to operate at different pressures; **characterized in that** the second chamber (10b) is fixed and positioned downstream of the first chamber (10a), relative to the predetermined feed direction (A) followed by the continuous strip (3).

2. A device as in claim 1, wherein the first chamber (10a) is fixed and positioned specularly in relation to the laser cutting head (7) on the opposite side of the continuous strip (3).

3. A device as in claim 1, wherein the mantle (6c) presents a plurality of through holes (6d), or a mesh structure, extending over the entire developable annular surface of the mantle (6c).

4. A device as in claim 1, wherein the mantle (6c) presents groups of through holes (6d) or discrete portions of mesh structure, distanced one from the next in such a way as to engage respective cutting areas of the continuous strip (3) singly and in succession.

5. A device as in claim 3 or 4, wherein the through holes (6d) or mesh structure are proportioned in such a way as to disallow the passage of scrap fragments, and thus cause the fragments to be retained on the mantle (6c).

6. A device as in any of the preceding claims, further comprising a station (13) at which the scrap fragments are collected.

7. A device as in claim 6, wherein the scrap collection station (13) occupies a lower portion of the device (1).

8. A device as in claim 1, wherein the first chamber (10a) and the second chamber (10b) are mutually adjacent.

9. A device as in claim 1 or 8, wherein the first chamber (10a) and the second chamber (10b) are in fluid communication.

10. A device as in any of the preceding claims, comprising a blower element (14) positioned specularly in relation to the conveyor (6) on the opposite side of the continuous strip (3) and facing an area affected by the laser cut, of which the function is to direct a flow of gas, preferably nitrogen or air, at the continuous strip (3).

11. A device as in claim 10, wherein the blower element (14) consists in a shroud (14a) shaped as a cap of cylindrical geometry, presenting a concave side directed toward the continuous strip (3).

12. A device as in claim 11, wherein the blower element (14) presents a plurality of nozzles (14b) distributed along the full length of the shroud (14a).

13. A device as in claim 12, wherein at least certain of the plurality of nozzles (14b) are directed toward the area affected by the laser cut.

14. A device as in any of the preceding claims, wherein the cutting head (7) comprises at least one mirror scanning appliance (100) by means of which to direct a laser beam (F) onto the area affected by the laser cut.

15. A device as in any of the preceding claims, wherein the cutting head (7) comprises two mirror scanning appliances (100), each serving to direct a respective laser beam (F) onto the area affected by the laser cut.

16. A device as in claim 14 or 15, wherein each mirror-scanning appliance (100) comprises focusing means (102) designed to keep the respective laser beam (F) trained correctly on the cutting area, in such a way as to produce the cut in the strip (3) while guaranteeing that the selfsame cut will present a suitably dependable level of quality.

17. A device as in claim 16 where dependent on claim 15, wherein focusing means (102) comprise two precision galvanometers (103), each associated with a respective mirror (104) of high reflectivity positioned to receive a laser beam (F) and divert it by reflection toward the cutting area.

18. A device as in claim 17, wherein each galvanometer (103) is rotatable about a respective axis, and the axes of rotation of the galvanometers (103) are mutually perpendicular in such a way as to direct the respective laser beams (F) onto any given point of the cutting area with high precision.

19. A device as in claim 17 or 18, wherein focusing means (102) further comprise an optical collimator (105) located upstream of the galvanometers (103), relative to a direction in which the laser beams (F) are projected, such as will expand a transverse dimension of the laser beam (F) and maintain correct focus of the selfsame beam on the entire cutting area, compensating for dissimilar optical distances between different points of the cutting area and the focusing means (102).

20. A device as in claim 19, wherein the collimator (105) consists in a plurality of lenses (106) operating in combination one with another.

21. A device as in claim 20, wherein one of the lenses (106) is translatable toward and away from the other lenses (106).

22. A device as in any of the preceding claims, comprising a control device (9) associated with the cutting head (7) and equipped with dedicated software, by which the movement of the cutting head (7) is piloted selectively to follow predetermined cutting paths (P).

## Patentansprüche

1. Vorrichtung zum Laserschneiden eines Bands, umfassend einen Förderer (6), über dem ein Band (3) eines Materials entlang einer vorgegebenen Zuführungsrichtung (A) vorgeschoben wird und mindestens teilweise eine Schleife bildet, einen Laserkopf (7), mittels dessen das Band (3) geschnitten wird, positioniert an der Seite des Bands (3) gegenständig zum Förderer (6), wobei der Förderer (6) aus einer Drehtrommel (6a) besteht, ausgestattet mit einem umlaufenden ringförmigen Mantel (6c), und das Band (3) mindestens teilweise eine Schleife um den Mantel (6c) bildet, und wobei der Förderer (6) intern mit einer ersten Kammer (10a) ausgestattet ist, die in der Lage ist, eine abziehende oder blasende Wirkung auf den Rauch zu erzeugen, der vom Laserschnitt erzeugt wird, sowie mit einer zweiten Kammer (10b), in der ein Teilvakuum aufrechterhalten wird, wobei die zwei Kammern (10a, 10b) separat ausgebildet sind, sodass sie bei unterschiedlichem Druck arbeiten, **dadurch gekennzeichnet, dass** die zweite Kammer (10b) stromabwärts der ersten Kammer (10a) fixiert und positioniert ist, relativ zur vorgegebenen Zuführungsrichtung (A), gefolgt vom Band (3).

2. Vorrichtung nach Anspruch 1, wobei die erste Kammer (10a) spekular im Vergleich zum Kopf für das Laserschneiden (7) an der entgegengesetzten Seite des Bands (3) fixiert und angeordnet ist.

3. Vorrichtung nach Anspruch 1, wobei der Mantel (6c) eine Vielzahl von Durchgangslöchern (6d) oder eine Maschenstruktur aufweist, sich erstreckend über die gesamte entwickelbare ringförmige Oberfläche des Mantels (6c).

4. Vorrichtung nach Anspruch 1, wobei der Mantel (6c) Gruppen von Durchgangslöchern (6d) oder einzelne Abschnitte einer Maschenstruktur aufweist, die so voneinander beabstandet sind, dass sie mit den jeweiligen Schneidbereichen des Bands (3) einzeln und in Folge in Eingriff gelangen.

5. Vorrichtung nach Anspruch 3 oder 4, wobei die Durchgangslöcher (6d) oder die Maschenstruktur so proportioniert sind, dass der Durchgang von Ausschussfragmenten verhindert wird, wodurch die Fragmente auf dem Mantel (6c) beibehalten werden.

6. Vorrichtung nach einem der vorhergehenden Ansprüche, zudem umfassend eine Station (13), an der die Ausschussfragmente gesammelt werden.

7. Vorrichtung nach Anspruch 6, wobei die Ausschusssammelstation (13) einen unteren Abschnitt der Vorrichtung (1) einnimmt.

8. Vorrichtung nach Anspruch 1, wobei die erste Kammer (10a) und die zweite Kammer (10b) aneinander angrenzen.

9. Vorrichtung nach Anspruch 1 oder 8, wobei die erste Kammer (10a) und die zweite Kammer (10b) in Fluidkommunikation miteinander stehen.

10. Vorrichtung nach einem der vorhergehenden Ansprüche, umfassend ein Blaselement (14), positioniert spekular zum Förderer (6) an der entgegegengesetzten Seite des Bands (3) und gegenüberliegend angeordnet zu einem vom Laserschnitt betroffenen Bereich, dessen Aufgabe es ist, einen Gasstrom, vorzugsweise Stickstoff oder Luft, auf das Band (3) zu richten.

11. Vorrichtung nach Anspruch 10, wobei das Blaselement (14) aus einem Abdeckblech (14a) besteht, das wie eine Kappe zylindrischer Geometrie geformt ist, aufweisend eine konkave Seite, gerichtet zum Band (3).

12. Vorrichtung nach Anspruch 11, wobei das Blaselement (14) eine Vielzahl von Düsen (14b) aufweist, die über die volle Länge des Abdeckblechs (14a) verteilt sind.

13. Vorrichtung nach Anspruch 12, wobei mindestens bestimmte der Vielzahl von Düsen (14b) zum vom Laserschnitt betroffenen Bereich gerichtet sind.

14. Vorrichtung nach einem der vorhergehenden Ansprüche, wobei der Schneidkopf (7) mindestens ein Spiegelscannergerät (100) umfasst, mittels dessen ein Laserstrahl (F) auf den vom Laserschnitt betroffenen Bereich gerichtet wird.

15. Vorrichtung nach einem der vorhergehenden Ansprüche, wobei der Schneidkopf (7) zwei Spiegelscannergeräte (100) umfasst, die jeweils dazu dienen, einen jeweiligen Laserstrahl (F) auf den vom Laserschnitt betroffenen Bereich zu richten.

16. Vorrichtung nach Anspruch 14 oder 15, wobei jedes Spiegelscannergerät (100) Bündelungsmittel (102) umfasst, die ausgelegt sind, um den jeweiligen Laserstrahl (100) korrekt auf den Schneidbereich gerichtet zu halten, sodass der Schnitt im Band (3) erzeugt wird und gleichzeitig garantiert wird, dass der Schnitt ein geeignetes zuverlässiges Qualitätsniveau aufweist.

17. Vorrichtung nach Anspruch 16, abhängig von Anspruch 15, wobei die Bündelungsmittel (102) zwei Präzisionsgalvanometer (103) umfassen, die jeweils mit einem jeweiligen Spiegel (104) hohen Reflexionsvermögens verbunden sind, positioniert, um einen Laserstrahl (F) zu empfangen und diesen durch Reflexion zum Schneidbereich zu lenken.

18. Vorrichtung nach Anspruch 17, wobei jedes Galvanometer (103) um eine jeweilige Achse drehbar ist und die Drehachsen der Galvanometer (103) lotrecht zueinander angeordnet sind, sodass die jeweiligen Laserstrahlen (F) auf einen beliebigen bestimmten Punkt des Schneidbereichs mit hoher Präzision gerichtet werden.

19. Vorrichtung nach Anspruch 17 oder 18, wobei die Bündelungsmittel (102) zudem einen optischen Kollimator (105) umfassen, positioniert stromaufwärts der Galvanometer (103) relativ zu einer Richtung, in die die Laserstrahlen (F) projiziert werden, sodass eine transversale Dimension des Laserstrahls (F) expandiert und die korrekte Bündelung des betreffenden Strahls auf dem gesamten Schneidbereich beibehalten wird, wobei ungleiche optische Entfernungen zwischen unterschiedlichen Stellen des Schneidbereichs und den Bündelungsmitteln (102) kompensiert werden.

20. Vorrichtung nach Anspruch 19, wobei der Kollimator (105) aus einer Vielzahl von Linsen (106) besteht, die in Kombination miteinander arbeiten.

21. Vorrichtung nach Anspruch 20, wobei eine der Linsen (106) zu den anderen Linsen (106) hin- und von diesen wegbewegt werden kann.

22. Vorrichtung nach einem der vorhergehenden Ansprüche, umfassend ein Steuergerät (9), verbunden mit dem Schneidkopf (7) und ausgerüstet mit einer entsprechenden Software, mittels dessen die Bewegung des Schneidkopfs (7) selektiv gesteuert wird, um den vorgegebenen Schneidwegen (P) zu folgen.

## Revendications

1. Dispositif pour couper une bande continue par laser, comprenant un convoyeur (6) sur lequel une bande continue (3) de matériel avançant le long d'une direction d'alimentation prédéterminée (A) est enroulée au moins en partie, une tête laser (7) par laquelle la bande continue (3) est coupée, est positionnée sur le côté de ladite bande (3) à l'opposé du convoyeur (6), dans lequel le convoyeur (6) consiste en un tambour rotatif (6a) pourvu d'une enveloppe extérieure annulaire en rotation (6c) et la bande continue (3) est enroulée au moins en partie autour de l'enveloppe extérieure (6c), et dans lequel le convoyeur (6) est pourvu intérieurement d'une première chambre (10a) pouvant générer une action d'extraction ou de soufflage sur la fumée produite par la découpe du laser et d'une seconde chambre (10b) maintenue dans un vide partiel, les deux chambres (10a, 10b) sont réalisées séparément, de sorte à opérer à des pressions différentes ; **caractérisé en ce que** la seconde chambre (10b) est fixe et positionnée en aval de la première chambre (10a), par rapport à la direction d'alimentation prédéterminée (A) empruntée par la bande continue (3).

2. Dispositif selon la revendication 1, dans lequel la première chambre (10a) est fixe et positionnée de façon spéculaire en fonction de la tête de découpe laser (7) sur le côté opposé de la bande continue (3).

3. Dispositif selon la revendication 1, dans lequel l'enveloppe extérieure (6c) présente une pluralité de trous passants (6d), ou une structure maillée, se développant sur toute la surface annulaire développable de l'enveloppe extérieure (6c).

4. Dispositif selon la revendication 1, dans lequel l'enveloppe extérieure (6c) présente des groupes de trous passants (6d) ou des parties discontinues de structure maillée, distantes les unes des autres de sorte à mettre en prise les zones de découpe respectives de la bande continue (3) une par une ou à la suite.

5. Dispositif selon les revendications 3 ou 4, dans lequel les trous passants (6d) ou la structure maillée sont proportionnés de sorte à empêcher le passage de fragments résiduels, provoquant ainsi la retenue desdits fragments sur l'enveloppe extérieure (6c).

6. Dispositif selon l'une quelconque des revendications précédentes, comprenant de plus un poste (13) où sont recueillis les fragments résiduels.

7. Dispositif selon la revendication 6, dans lequel le poste de collecte de fragments résiduels (13) occupe une portion inférieure du dispositif (1).

8. Dispositif selon la revendication 1, dans lequel la première chambre (10a) et la seconde chambre (10b) sont réciproquement contiguës.

9. Dispositif selon les revendications 1 ou 8, dans lequel la première chambre (10a) et la seconde chambre (10b) sont en communication fluidique.

10. Dispositif selon l'une quelconque des revendications précédentes, comprenant un élément soufflant (14) positionné de façon spéculaire par rapport au convoyeur (6) sur le côté opposé de la bande continue (3) et faisant face à une zone concernée par la découpe au laser, dont la fonction est de diriger un flux de gaz, de préférence de l'azote ou de l'air, sur la bande continue (3).

11. Dispositif selon la revendication 10, dans lequel l'élément soufflant (14) consiste en un tube de protection de jet (14a) ayant la forme d'une coiffe à géométrie cylindrique, présentant un côté concave dirigé vers la bande continue (3).

12. Dispositif selon la revendication 11, dans lequel l'élément soufflant (14) présente une pluralité de buses (14b) distribuées le long de toute la longueur du tube de protection de jet (14a).

13. Dispositif selon la revendication 12, dans lequel au moins quelques-unes des buses (14b) sont dirigées vers la zone concernée par la découpe au laser.

14. Dispositif selon l'une quelconque des revendications précédentes, dans lequel la tête de découpe (7) comprend au moins un appareil à balayage en miroir (100) qui permet de diriger un faisceau laser (F) sur la zone concernée par la découpe au laser.

15. Dispositif selon l'une quelconque des revendications précédentes, dans lequel la tête de découpe (7) comprend deux appareils à balayage en miroir (100) permettant chacun de diriger un faisceau laser respectif (F) sur la zone concernée par la découpe au laser.

16. Dispositif selon les revendications 14 ou 15, dans lequel chaque appareil à balayage en miroir (100) comprend des moyens de centrage (102) conçus pour maintenir le faisceau laser respectif (F) orienté de façon correcte sur la zone de découpe, de sorte à réaliser la découpe de la bande (3) tout en garantissant que ladite découpe présentera un niveau fiable de qualité adapté.

17. Dispositif selon la revendication 16 lorsqu'elle dépend de la revendication 15, dans lequel les moyens de centrage (102) comprennent deux galvanomètres de précision (103), chacun associés à un miroir respectif (104) à haute réflexion positionné pour recevoir un faisceau laser (F) et le dévier par réflexion vers la zone de découpe.

18. Dispositif selon la revendication 17, dans lequel chaque galvanomètre (103) peut tourner autour d'un axe respectif, et les axes de rotation des galvanomètres (103) sont mutuellement perpendiculaires de sorte à diriger les faisceaux laser respectifs (F) en tout point donné de la zone de découpe avec une très haute précision.

19. Dispositif selon les revendications 17 ou 18, dans lequel les moyens de centrage (102) comprennent de plus une lunette de centrage (105) située en amont des galvanomètres (103), selon une direction dans laquelle les faisceaux laser (F) sont projetés, de sorte à développer une dimension transversale du faisceau laser (F) et à maintenir un centrage correct dudit faisceau sur la totalité de la zone de découpe, compensant les distances optiques dissemblables entre les différents points de la zone de découpe et les moyens de centrage (102).

20. Dispositif selon la revendication 19, dans lequel la lunette (105) consiste en une pluralité de lentilles (106) opérant en combinaison les unes avec les autres.

21. Dispositif selon la revendication 20, dans lequel l'une des lentilles (106) coulisse en se rapprochant ou en s'éloignant des autres lentilles (106).

22. Dispositif selon l'une quelconque des revendications précédentes, comprenant un dispositif de commande (9) associé à la tête de découpe (7) et équipé d'un logiciel spécialisé, par lequel le déplacement de la tête de découpe (7) est piloté sélectivement pour suivre des tracés de découpe prédéterminés (P).
